# EUROPEAN PATENT APPLICATION

(11) **EP 4 757 366 A1**
(43) Date of publication of application: **10.06.2026**
(21) Application number: 24218437.2
(22) Date of filing: 09.12.2024
(51) Int. Cl.: H04W 12/03, H04W 4/80, H04W 12/08, H04W 12/106

(54) **METHODS RELATING TO AEROSOL GENERATING APPARATUSES**

(71) Applicant: IMPERIAL TOBACCO LIMITED, Bristol BS3 2LL (GB)
(72) Inventor: HYLA, Jan, Bristol, BS3 2LL (GB)
(74) Representative: Mewburn Ellis LLP

(57) **Abstract**

There is provided a communication method performed by an aerosol generating apparatus, the method comprising: establishing a communication connection with an external device, and after establishing the communication connection: receiving a data packet from the external device, wherein the data packet contains: m bytes providing a message authentication code, where m is an integer; r bytes providing a packet-specific random number, where r is an integer; and e bytes providing a payload, where e is an integer; and verifying the message authentication code using the r bytes and the e bytes.

## Description

### FIELD

The present disclosure relates to methods performed by aerosol generating apparatuses, as well as to aerosol generating apparatuses, and aerosol generating systems.

### BACKGROUND

A typical aerosol generating apparatus may comprise a power supply, an aerosol generating unit that is driven by the power supply, an aerosol precursor, which in use is aerosolised by the aerosol generating unit to generate an aerosol, and a delivery system for delivery of the aerosol to a user.

Some aerosol generating apparatuses comprise communication capability to communicate with an external device, e.g. a user device so as to tailor the smoking experience to the user by allowing the user to set certain operational parameters.

US2022/0269763A1, WO2019/173923A1, CN215583155U, US2021/350374A1, WO2022/189796 and US2021/0011446A1 all disclose aerosol generating apparatuses configured to communicate with an external device.

The present inventor believes that improving security of communication between an aerosol generating apparatus and an external device may be desirable.

### SUMMARY

The present inventor has observed that improving security of communication between an aerosol generating apparatus and an external device may be particularly desirable in a situation where an external device causes enabling/disabling of functions of the aerosol generating apparatus. For example, a user may be required to verify their age via an external device in order to unlock the aerosol generating apparatus. For example, following successful age verification via the external device, the external device may send an unlock command to the aerosol generating apparatus to unlock the aerosol generating apparatus (i.e. permit the aerosol generating apparatus to be able to generate aerosol), for example for a predetermined time period. The present inventor observes that the unlock command sent by the external device to the aerosol generating apparatus could be intercepted, recorded and subsequently replayed to the aerosol generating apparatus or replayed to another aerosol generating apparatus. As such, it may be possible for a rogue operator to repeatedly unlock one or more aerosol generating apparatuses by repeatedly replaying the recorded instructions, thereby bypassing the age verification process.

According to an aspect described below, there is provided a handshake process for improving security of communication between an aerosol generating apparatus and an external device. According to another aspect described below, there is provided a communication method for improving security of communication between an aerosol generating apparatus and an external device. The handshake process and communication method may be used alone or in combination. As such, features described with respect to the handshake process may be used as part of the communication method, and vice versa.

According to a first aspect, there is provided a handshake process, performed by an aerosol generating apparatus, the handshake process including: sending first information to the external device; receiving from the external device second information in response to the first information; determining whether the second information is valid or invalid by determining whether the second information is derived from the first information using shared knowledge that is shared by the aerosol generating apparatus and the external device; if the second information is determined to be valid, allowing communication with the external device to continue; if the second information is determined to be invalid, performing at least one action to disrupt communication with the external device.

Whenever at least one action to disrupt communication with the external device is referred to herein, this may be any suitable action for disrupting communication with the external device such as: ignoring any information transmitted by the external device, or switching off the communication interface utilised for communication with the external device.

By performing the handshake process according to the first aspect, security of communication between the aerosol generating apparatus and the external device may be improved. In particular, it may be more difficult for a rogue operator to successfully impersonate the external device, since communication with the external device is disrupted if the second information is determined to be invalid. This may help to prevent unauthorized parties from manipulating operation of the aerosol generating apparatus, e.g. by sending false commands to the aerosol generating apparatus (e.g. by recording and replaying such commands), or extracting personal information from the aerosol generating apparatus.

The handshake process performed by the aerosol generating apparatus can be understood as a method performed by the aerosol generating apparatus.

The first information may be a random value. For example, the random value may be a pseudo-random number or a quasi-random number, e.g. a SHA-256 hash of a pseudo-random number or a quasi-random number. The random value may be locally generated by the aerosol generating apparatus. By using the random value in the handshake process, the aerosol generating apparatus may be able to disrupt communication with an external device operated by a rogue operator attempting to impersonate a valid external apparatus by replaying recorded commands previously sent to the aerosol generating apparatus by the valid external apparatus.

The first information may be apparatus-specific information. For example, the apparatus-specific information may be an identifier (e.g. serial number) of the aerosol generating apparatus, or may be a hash (e.g. a SHA-256 hash) of the identifier (e.g. serial number). The apparatus-specific information may be locally stored by the aerosol generating apparatus, and or derived from (e.g. using a hash function) an identifier (e.g. serial number) of the aerosol generating apparatus. The identifier of the aerosol generating apparatus may, e.g., be stored by the aerosol generating apparatus.

By using the apparatus-specific information in the handshake process, the aerosol generating apparatus may be able to disrupt communication with an external device operated by a rogue operator attempting to impersonate a valid external apparatus by replaying recorded commands previously sent to another aerosol generating apparatus by the valid external apparatus.

Further, by using the apparatus-specific information in the handshake process, the external device may be able to carry out a step of determining the identity of the aerosol generating apparatus from the apparatus-specific information (e.g. looking up an identifier of the aerosol generating apparatus via a look-up table which records the identifier against the hash of the identifier), and may be able to carry out a further step of using the identity of the aerosol generating apparatus (determined from the apparatus-specific information) in a further processing step executed at the external device. This further processing step may, for example, include notifying the identity of the aerosol generating apparatus to a mobile communication device for display at the mobile communication device, for example by sending the identifier (e.g. serial number) to the mobile communication device for display at the mobile communication device.

The shared knowledge may include a pre-shared function. The pre-shared function may be a hash function, such as SHA-256. In use, the external device may generate the second information by using the first information and the pre-shared function; the aerosol generating apparatus may likewise use the first information and the pre-shared function to determine whether the second information received from the external device is valid or invalid.

The shared knowledge may include the pre-shared function and a pre-shared key. The pre-shared function, for example a keyed hash function, may be configured to use the pre-shared key. In some examples, the pre-shared function may be HMAC-SHA-256 and the pre-shared key may be a HMAC key. In use, the external device may generate the second information by using the first information, the pre-shared function and the pre-shared key; the aerosol generating apparatus may likewise use the first information, the pre-shared function and the pre-shared key to determine whether the second information received from the external device is valid or invalid.

As such, the pre-shared function may in some examples be a non-keyed hash function, e.g. SHA-256; and may in other examples be a keyed hash function, e.g. HMAC-SHA-256.

The second information may be an authentication code calculated using the shared knowledge. In use, the authentication code may demonstrate to the aerosol generating apparatus that the external device is in possession of the shared knowledge for authenticating the identity of the external device to the aerosol generating apparatus.

The first information may be unknown to the external device prior to the aerosol generating apparatus sending the first information to the external device (i.e. prior to the external device receiving the first information from the aerosol generating apparatus). For example, where the first information is the random value, the external device may not know the random value until it is received from the aerosol generating apparatus. By transmitting to the external device information which is unknown to the external device, the handshake process may be further improved since the external device need not be in possession of the information for performing the handshake process.

In some examples, the handshake process may include multiple rounds of communication between the aerosol generating apparatus and the external device, wherein each round of communication includes the aerosol generating apparatus sending information to the external device and receiving from the external device information in response. Subsequent rounds of communication, e.g. a second round of communication, may be conditional on the aerosol generating apparatus determining the information received from the external device in the preceding round of communication to be valid.

The handshake process may further include: if the second information is determined to be valid by the aerosol generating apparatus, sending third information to the external device; and receiving fourth information from the external device; determining whether the fourth information is valid or invalid by determining whether the fourth information is derived from the third information using the shared knowledge that is shared by the aerosol generating apparatus and the external device.

If the fourth information is determined to be valid, the aerosol generating apparatus may allow communication with the external device to continue.

If the fourth information is determined to be invalid, the aerosol generating apparatus may perform at least one action to disrupt communication with the external device.

The shared knowledge may include first shared knowledge and second shared knowledge. The first shared knowledge may be used for determining whether the second information is derived from the first information. The second shared knowledge may be used for determining whether the fourth information is derived from the third information. As described above, the second information may be an authentication code calculated using the (first) shared knowledge. The fourth information may be an authentication code calculated using the second shared knowledge.

The third information may be one of a random value or apparatus-specific information, as described above with respect to the first information. The first information and the third information may be selected such that each may be a random value or apparatus-specific information, or such that one of the first information and the third information is a random value and the other of the first information and the third information is apparatus-specific information. That is to say, the first information may be the random value and the third information may be the apparatus-specific information, or the third information may be the random value and the first information may be the apparatus-specific information.

The second shared knowledge may include a pre-shared function, as described above with respect to the (first) shared knowledge, and may include a pre-shared key, as described above with respect to the (first) shared knowledge.

In some examples, the first shared knowledge may include a non-keyed hash function and the second shared knowledge may include a keyed hash function and the key, or vice versa.

By having multiple rounds of communication involving different shared knowledge communication between the aerosol generating apparatus and the external device may be further improved.

The information sent to and received from the external device as part of the handshake process may be contained in one or more data packets. Each data packet may contain, or may consist of, the following: m bytes providing a message authentication code, where m is an integer; r bytes providing a packet-specific random number, where r is an integer; and e bytes providing a payload, where e is an integer. The payload may be encrypted. The data packets, verification of the message authentication code contained in the data packets, and encryption/decryption of the payload may be as described in connection with the second aspect of the invention.

In some examples, communication during the handshake process and, conditional on successful completion of the handshake, also following the handshake process, may utilise the data packets.

In some examples, the payload may not be encrypted during the handshake process. The payload may be encrypted following successful completion of the handshake process.

In some examples, the roles of the aerosol generating apparatus and the external device may be reversed in the handshake process according to the first aspect. Thus there is also provided another handshake process, performed by an external device, the handshake process including: sending first information to the aerosol generating apparatus; receiving from the aerosol generating apparatus second information in response to the first information; determining whether the second information is valid or invalid by determining whether the second information is derived from the first information using shared knowledge that is shared by the external device and the aerosol generating apparatus; if the second information is determined to be valid, allowing communication with the aerosol generating apparatus to continue; if the second information is determined to be invalid, performing at least one action to disrupt communication with the aerosol generating apparatus.

This other handshake process performed by the external device may correspond to the handshake process according to the first aspect, other than the aforementioned reversal of roles of the aerosol generating apparatus and the external device. As such, features described with respect to the handshake process performed by the aerosol generating apparatus apply also to the other handshake process performed by the external device, where the roles of the aerosol generating apparatus and the external device are reversed.

In some examples, the handshake process performed by the aerosol generating apparatus and the other handshake process performed by the external device may both be performed, such that either (or both) of the aerosol generating apparatus and the external device may perform at least one action to disrupt communication with the other.

According to a second aspect, there is provided a communication method performed by the aerosol generating apparatus, the communication method including: establishing a communication connection with the external device.

In some examples, the handshake process as described above in connection with the first aspect (and/or the handshake process performed by the external device) may be initiated as part of the communication method. That is to say, the communication method may further include, after establishing the communication connection, initiating the handshake process as described above in connection with the first aspect between the aerosol generating apparatus and the external device.

The communication method may include, if the initiated handshake process is not completed within a predetermined time period t0, performing at least one action to disrupt communication with the external device. By disrupting communication if the initiated handshake process is not completed within the predetermined time period t0, security of communication with the external device and operation of the aerosol generating apparatus may be improved. The predetermined time period t0 may have any suitable value. For example, the time period t0 may be up to 20 seconds, optionally up to 15 seconds, and optionally up to 10 seconds; and may be at least 2 seconds, optionally at least 5 seconds, and optionally at least 8 seconds. In some examples, the time period t0 is 10 seconds.

In this context, the initiated handshake process may be taken to be completed if a step of allowing communication with the external device to continue is reached in the process (e.g. after the second information is determined to be invalid and/or after the fourth information is determined to be valid).

The communication method may include, after establishing the communication connection: receiving a data packet (which may be one of a plurality of data packets) from the external device. Where the communication method includes the handshake process, the data packet(s) may be received after completing the handshake process.

The/each data packet may be as described above. Thus, the/each data packet may contain, or may consist of, the following: m bytes providing a message authentication code, where m is an integer; r bytes providing a packet-specific random number, where r is an integer; and e bytes providing a payload, where e is an integer.

The communication method may further include verifying the message authentication code (of the/each data packet) using the r bytes and the e bytes.

By using the r bytes and the e bytes for verifying the message authentication code, security of communication between the aerosol generating apparatus and an external device may be further improved.

This can be understood by a counter-example in which a message authentication code for a given message is generated using a keyed hash function based only on the payload of the message (and the secret key) but without using a random number - in this case, subsequent packets with identical payloads may result in the same message authentication code (hash) such that a rogue operator may be able to draw conclusions as to the content of the payload of different data packets.

In contrast with the second aspect of this disclosure, when the message authentication code (of the/each data packet) is verified using the r bytes *providing a packet-specific random* number, in addition to using the e bytes (providing a payload), subsequent data packets containing the same payload will have different message authentication codes, which would make it much more difficult for a rogue operator to draw conclusions as to the content of the payloads of different data packets.

In some examples, the payload may be encrypted; and the communication method may further include, conditional on the aerosol generating apparatus successfully verifying the message authentication code: generating an initialisation vector IV by combining the r bytes of the data packet and p bytes locally stored by the aerosol generating apparatus; and using the initialisation vector IV to decrypt the payload.

The method may include, if the aerosol generating apparatus does not successfully verify the message authentication code, taking at least one action to disrupt communication between the aerosol generating apparatus and the external device. In some examples, this action may comprise disregarding the (not successfully verified) data packet. In other examples, this action may comprise, for example, terminating the communication connection between the aerosol generating apparatus and the external device.

By encrypting the payload of the data packet, end-to-end encryption may be provided to improve security of communication in addition to, and independent of, any encryption/decryption as may be performed as part of a standard communication protocol (for example if using Bluetooth BLE communication).

By generating the initialisation vector IV using locally stored data and the transmitted r bytes, security of communication may be further improved. Conventionally the entire initialisation vector may be transmitted, whereas according to the present disclosure only the r bytes may be transmitted and the remaining p bytes stored locally (and therefore able to be kept secret).

When the payload is decrypted using the initialisation vector IV in combination with the message authentication code of the data packet being verified using the r bytes and the e bytes, the aerosol generating apparatus may be able to confirm that it is communicating with a valid external device, as well as validating the integrity of the initialisation vector IV and the encrypted payload (where the payload is encrypted), which may be helpful in securing communication between the external device and the aerosol generating apparatus.

In some examples, the data packet may consist of the m bytes, the r bytes, and the e bytes.

In some examples, the r bytes may be pseudo-random or quasi-random.

In some examples, p may be equal to r (i.e. p = r).

Combining the r bytes and the p bytes may include concatenating the r bytes and the p bytes. For example, combining the r bytes and the p bytes may be concatenating the p bytes and the r bytes.

The method may further include using a symmetrical encryption/decryption algorithm and an encryption/decryption key to decrypt the payload. Encryption/decryption may use any suitable algorithm the AES-128-CTR algorithm

Verifying the message authentication code may include generating a message authentication code using the r bytes and the e bytes; and comparing the generated message authentication code and the received message authentication code.

Verifying the message authentication code may use shared knowledge that is shared by the aerosol generating apparatus and the external device.

The shared knowledge may include a pre-shared function. The pre-shared function may be a hash function, such as SHA-256.

The shared knowledge may include the pre-shared function and a pre-shared key. The pre-shared function, for example a keyed hash function, may be configured to use the pre-shared key. In some examples, the pre-shared function may be HMAC-SHA-256 and the pre-shared key may be a HMAC key.

The message authentication code may have been calculated by the external device using the r bytes and the e bytes and using the shared knowledge.

The message authentication code may be a hash-based message authentication code, for example HMAC, e.g. using the HMAC-SHA-256 algorithm.

In some examples, m may be equal to 32 (i.e. m = 32), r may be equal to 8 (i.e. r = 8), and/or e may be equal to 80 (i.e. e = 80). Thus, in some examples, the/each data packet may have a length of 120 bytes.

With respect to the handshake process according to the first aspect and the communication method according to the second aspect, the external device may be a server. In other examples, the external device may be a mobile communication device, such as a smart phone.

In some examples, the aerosol generating apparatus may communicate directly with the external device, e.g. directly communicate with a server, or may communicate with the external device via another device, e.g. communicate with a server via a smartphone. Information being sent between the aerosol generating apparatus and the external device, such as the first information and the second information, may be transmitted in the one or more data packets over different networks, with each having its own communication protocol. This means that the data packet may be, for example, disassembled and reassembled or encrypted and decrypted according to these various communication protocols. That is, the data packet may be modified in accordance with the relevant communication protocol. The techniques taught herein are agnostic with respect to how the data packet is manipulated in transmission from external device to the aerosol generating apparatus (and vice versa), so long as the data packet is intact after such manipulations.

The external device may be a server. The aerosol generating apparatus may establish the communication connection with the server via a mobile communication device. In some examples, transmission of a data packet from the server to the aerosol generating apparatus (and vice versa) may involve transmission of the data packet between server and mobile communication device through a mobile communication connection, e.g. including a TCP/IP network, and may further involve transmission between mobile communication device and aerosol generating apparatus via a short range or near field communication channel, such as Bluetooth or Bluetooth Low Energy (BLE) protocol. As such, the communication connection may include a short range or near field communication connection between the aerosol generating apparatus and the mobile communication device; and may include a mobile communication connection between the mobile communication device and the external device.

As regards using BLE, this may be used for two-way communication between the aerosol generating apparatus and the mobile communication device. For example, a BLE connection may use two custom characteristics under a custom service in order to enable two-way communication over that BLE connection. In some examples, a WRITE characteristic may be used for transmitting data to the aerosol generating apparatus, and a NOTIFY characteristic may be used for transmitting data from the aerosol generating apparatus.

According to a third aspect, there is provided a communication method performed by an aerosol generating apparatus, the method comprising:
establishing a communication connection with an external device, and after establishing the communication connection:
   receiving a data packet from the external device,
   wherein the data packet contains:
   m bytes providing a message authentication code, where m is an integer;
   r bytes providing a packet-specific random number, where r is an integer; and
   e bytes providing a payload, where e is an integer;
wherein the payload is encrypted; and
wherein the method further includes, conditional on successfully verifying the message authentication code:
   generating an initialisation vector IV by combining the r bytes of the data packet and p bytes locally stored by the aerosol generating apparatus; and
   using the initialisation vector IV to decrypt the payload.

The communication method according to the third aspect may include any feature described in relation to the communication method according to the first and second aspects.

According to a fourth aspect, there is provided an aerosol generating apparatus arranged to perform the handshake process according to the first aspect, the communication method according to the second aspect and/or the communication method according to the third aspect.

According to a fifth aspect, there is provided an aerosol generating system including the external device and the aerosol generating apparatus according to the third aspect. The system may optionally include the mobile communication device.

According to a sixth aspect, there is provided electrical circuitry configured to cause the aerosol generating apparatus to perform the handshake process according to the first aspect, the communication method according to the second aspect and/or the communication method according to the third aspect.

According to a seventh aspect, there is provided a computer readable medium comprising instructions which, when executed by a processing element of an aerosol generating apparatus, cause the aerosol generating apparatus to perform the handshake process according to the first aspect, the communication method according to the second aspect and/or the communication method according to the third aspect.

According to a eighth aspect, there is provided a handshake process performed by the aerosol generating apparatus and the external device, including: the aerosol generating apparatus sending the first information to the external device; the external device receiving the first information and generating the second information from the first information using shared knowledge that is shared by the aerosol generating apparatus and the external device, and sending the second information to the aerosol generating apparatus; the aerosol generating apparatus receiving the second information and determining whether the second information is valid or invalid by determining whether the second information is derived from the first information using the shared knowledge; and the aerosol generating apparatus allowing communication with the external device to continue if the second information is determined to be valid, or performing at least one action to disrupt communication with the external device if the second information is determined to be invalid.

The handshake process according to the eighth aspect may include any feature described in relation to the handshake process according to the first aspect.

For example, if using the apparatus-specific information in the handshake process, the external device may carry out a step of determining the identity of the aerosol generating apparatus from the apparatus-specific information, and may further carry out a step of using the identity of aerosol generating apparatus in a further processing step executed at the external device. This further processing step may, for example, include notifying the identity of the aerosol generating apparatus to a mobile communication device for display at the mobile communication device, for example by sending the identifier (e.g. serial number) to the mobile communication device for display at the mobile communication device.

In some examples, e.g. applicable where the apparatus-specific information is derived from (e.g. using a hash function) an identifier of the aerosol generating apparatus, determining the identity of the aerosol generating apparatus may include accessing a store of information which relates the apparatus-specific information (e.g. hashed serial number) to the identifier (e.g. serial number) of the aerosol generating apparatuses, and using the store of information to determine the identity of the aerosol generating apparatus. For example, the external apparatus may determine the identity of the aerosol generating apparatus by looking up in a database the hashed serial number sent by the aerosol generating apparatus and obtaining the serial number from the database.

The store of information may be a lookup table or database, for example.

The store of information may relate apparatus-specific information to identity of a plurality of aerosol generating apparatuses, including the aerosol generating apparatus.

According to a ninth aspect, there is provided a handshake process performed by the external device, including: receiving the first information from the aerosol generating apparatus; generating the second information from the first information using shared knowledge that is shared by the aerosol generating apparatus and the external device; sending the second information to the aerosol generating apparatus.

The handshake process according to the ninth aspect may include any feature described in relation to the handshake process according to the first aspect and/or the eighth aspect.

According to an tenth aspect, there is provided a communication method performed by the aerosol generating apparatus and the external device, the method comprising: the aerosol generating apparatus establishing the communication connection with the external device, and after establishing the communication connection: the external apparatus sending a data packet to the aerosol generating apparatus, wherein the data packet contains: m bytes providing a message authentication code, where m is an integer; r bytes providing a packet-specific random number, where r is an integer; and e bytes providing a payload, where e is an integer; wherein the external device has calculated the message authentication code using the r byte and the e bytes; and the communication method further comprising: the aerosol generating apparatus verifying the message authentication code using the r bytes and the e bytes.

The communication method according to the tenth aspect may include any feature described in relation to the communication method according to the second aspect.

According to a eleventh aspect, there is provided a communication method performed by the external device, the method comprising: establishing the communication connection with the aerosol generating apparatus, and after establishing the communication connection: sending a data packet to the aerosol generating apparatus, wherein the data packet contains: m bytes providing a message authentication code, where m is an integer; r bytes providing a packet-specific random number, where r is an integer; and e bytes providing a payload, where e is an integer; wherein the external device has calculated the message authentication code using the r byte and the e bytes.

The communication method according to the eleventh aspect may include any feature described in relation to the communication method according to the second aspect and/or the tenth aspect.

According to a twelfth aspect, there is provided a communication method performed by an aerosol generating apparatus and an external device, the method comprising:
establishing a communication connection with the external device, and after establishing the communication connection:
   the external device sending a data packet to the aerosol generating apparatus;
   the aerosol generating apparatus receiving the data packet from the external device, wherein the data packet contains:
      m bytes providing a message authentication code, where m is an integer;
      r bytes providing a packet-specific random number, where r is an integer; and
      e bytes providing a payload, where e is an integer;
wherein the payload is encrypted; and
wherein the method further includes, the aerosol generating apparatus, conditional on successfully verifying the message authentication code:
   generating an initialisation vector IV by combining the r bytes of the data packet and p bytes locally stored by the aerosol generating apparatus; and
   using the initialisation vector IV to decrypt the payload.

The communication method according to the twelfth aspect may include any feature described in relation to the communication method according to the first, second and/or third aspects.

The preceding summary is provided for purposes of summarizing some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

### BRIEF DESCRIPTION OF THE FIGURES

Aspects, features and advantages of the present disclosure will become apparent from the following description of examples in reference to the appended drawings in which like numerals denote like elements.
**Fig. 1** is a block system diagram showing an example aerosol generating apparatus.
**Fig. 2** is a block system diagram showing an example implementation of the apparatus of Fig. 1, where the aerosol generating apparatus is configured to generate aerosol from a liquid precursor.
**Figs. 3A and 3B** are schematic diagrams showing an example implementation of the apparatus of Fig. 2.
**Fig. 4** is a block system diagram showing an example implementation of the apparatus of Fig. 1, where the aerosol generating apparatus is configured to generate aerosol from a solid precursor.
**Fig. 5** is a schematic diagram showing an example implementation of the apparatus of Fig. 4.
**Fig. 6** is a block system diagram showing an example aerosol generating system including an aerosol generating apparatus.
**Fig. 7** illustrates a handshake process performed by the aerosol generating apparatus.
**Fig. 8** illustrates an implementation of the handshake process of Fig. 7 containing optional additional steps.
**Fig. 9** illustrates an exemplary communication method involving including the handshake process of Fig. 7 or Fig. 8.
**Fig. 10** illustrates a communication method performed by the aerosol generating apparatus.
**Fig. 11** illustrates a data packet used in the communication method.
**Fig. 12** illustrates an initialisation vector used in the communication method.
**Fig. 13** illustrates another communication method performed by the aerosol generating apparatus.

### DETAILED DESCRIPTION OF EMBODIMENTS

Before describing several examples implementing the present disclosure, it is to be understood that the present disclosure is not limited by specific construction details or process steps set forth in the following description and accompanying drawings. Rather, it will be apparent to those skilled in the art having the benefit of the present disclosure that the systems, apparatuses and/or methods described herein could be embodied differently and/or be practiced or carried out in various alternative ways.

Unless otherwise defined herein, scientific and technical terms used in connection with the presently disclosed inventive concept(s) shall have the meanings that are commonly understood by those of ordinary skill in the art, and known techniques and procedures may be performed according to conventional methods well known in the art and as described in various general and more specific references that may be cited and discussed in the present specification.

Any patents, published patent applications, and non-patent publications mentioned in the specification are hereby incorporated by reference in their entirety.

All examples implementing the present disclosure can be made and executed without undue experimentation in light of the present disclosure. While particular examples have been described, it will be apparent to those of skill in the art that variations may be applied to the systems, apparatus, and/or methods and in the steps or in the sequence of steps of the methods described herein without departing from the concept, spirit, and scope of the inventive concept(s). All such similar substitutions and modifications apparent to those skilled in the art are deemed to be within the spirit, scope, and concept of the inventive concept(s) as defined by the appended claims.

The use of the term "a" or "an" in the claims and/or the specification may mean "one," as well as "one or more," "at least one," and "one or more than one." As such, the terms "a," "an," and "the," as well as all singular terms, include plural referents unless the context clearly indicates otherwise. Likewise, plural terms shall include the singular unless otherwise required by context.

The use of the term "or" in the present disclosure (including the claims) is used to mean an inclusive "and/or" unless explicitly indicated to refer to alternatives only or unless the alternatives are mutually exclusive. For example, a condition "A or B" is satisfied by any of the following: A is true (or present) and B is false (or not present), A is false (or not present) and B is true (or present), and both A and B are true (or present).

As used in this specification and claim(s), the words "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless otherwise explicitly stated as incompatible, or the physics or otherwise of the embodiments, examples, or claims prevent such a combination, the features of examples disclosed herein, and of the claims, may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of example(s), embodiment(s), or dependency of claim(s). Moreover, this also applies to the phrase "in one embodiment," "according to an embodiment," and the like, which are merely a stylistic form of wording and are not to be construed as limiting the following features to a separate embodiment to all other instances of the same or similar wording. This is to say, a reference to 'an,' 'one,' or 'some' embodiment(s) may be a reference to any one or more, and/or all embodiments, or combination(s) thereof, disclosed. Also, similarly, the reference to "the" embodiment may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably:
As used herein, an **"aerosol generating apparatus"** (or **"electronic(e)-cigarette")** may be an apparatus configured to deliver an aerosol to a user for inhalation by the user. The apparatus may additionally/alternatively be referred to as a "smoking substitute apparatus", if it is intended to be used instead of a conventional combustible smoking article. As used herein a combustible "smoking article" may refer to a cigarette, cigar, pipe or other article, that produces smoke (an aerosol comprising solid particulates and gas) via heating above the thermal decomposition temperature (typically by combustion and/or pyrolysis).

As used herein, an **"aerosol generating component"** may refer to a component that includes an aerosol precursor. The component may include an aerosol generating unit e.g. it may be arranged as a cartomizer. The component may include a mouthpiece. The component may include a storage portion, e.g. a reservoir or tank, for storage of the aerosol precursor.

With liquid or gel implementations of the aerosol precursor, e.g. an e-liquid, the component may be referred to as a "capsule" or a "pod" or an "e-liquid consumable". In some embodiments, the aerosol precursor component may be affixed to the device body to form the aerosol generating apparatus. In these embodiments, the reservoir/tank may be refillable.

With solid material implementations of the precursor, e.g. tobacco or reconstituted tobacco formulation, the component may be referred to as a "stick" or "package" or "heat-not-burn consumable". In a heat-not-burn consumable, the mouthpiece may be implemented as a filter and the consumable may be arranged to carry the precursor. The consumable may be implemented as a dosage or pre-portioned amount of material, including a loose-leaf product.

The aerosol generating component e.g. the capsule, pod, stick, package or consumable may be for releasable coupling to a device body to form the aerosol generating apparatus.

The device body may comprise a power supply for powering the aerosol generating unit.

An aerosol generated by the apparatus may comprise an aerosol with particle sizes of 0.2 - 7 microns, or less than 10 microns, or less than 7 microns. This particle size may be achieved by control of one or more of: heater temperature; cooling rate as the vapour condenses to an aerosol; flow properties including turbulence and velocity. The generation of aerosol by the aerosol generating apparatus may be controlled by an input device. The input device may be configured to be user-activated, and may for example include or take the form of an actuator (e.g. actuation button) and/or an airflow sensor.

Each occurrence of the aerosol generating apparatus being caused to generate aerosol for a period of time (which may be variable) may be referred to as an **"activation"** of the aerosol generating apparatus. The aerosol generating apparatus may be arranged to allow an amount of aerosol delivered to a user to be varied per activation (as opposed to delivering a fixed dose of aerosol), e.g. by activating an aerosol generating unit of the apparatus for a variable amount of time, e.g. based on the strength/duration of a draw of a user through a flow path of the apparatus (to replicate an effect of smoking a conventional combustible smoking article).

The aerosol generating apparatus may be portable. As used herein, the term **"portable"** may refer to the apparatus being for use when held by a user.

As used herein, an **"aerosol generating system"** may be a system that includes an aerosol generating apparatus and optionally other circuitry/components associated with the function of the apparatus, e.g. one or more external devices and/or one or more external components (here "external" is intended to mean external to the aerosol generating apparatus). As used herein, an "external device" and "external component" may include one or more of a: a charging device, a mobile communication device (which may be connected to the aerosol generating apparatus, e.g. via a wireless or wired connection); a networked-based computer (e.g. a remote server); a cloud-based computer; any other server system.

An example aerosol generating system may be a system for managing an aerosol generating apparatus. Such a system may include, for example, a mobile communication device, a network server, as well as the aerosol generating apparatus.

As used herein, an **"aerosol"** may include a suspension of precursor, including as one or more of: solid particles; liquid droplets; gas. Said suspension may be in a gas including air. An aerosol herein may generally refer to/include a vapour. An aerosol may include one or more components of the precursor.

As used herein, a **"precursor"** may include one or more of a: liquid; solid; gel; loose leaf material; other substance. The precursor may be processed by an aerosol generating unit of an aerosol generating apparatus to generate an aerosol. The precursor may include one or more of: an active component; a carrier; a flavouring. The active component may include one or more of nicotine; caffeine; a cannabidiol oil; a non-pharmaceutical formulation, e.g. a formulation which is not for treatment of a disease or physiological malfunction of the human body. The active component may be carried by the carrier, which may be a liquid, including propylene glycol and/or glycerine. The term "flavouring" may refer to a component that provides a taste and/or a smell to the user. The flavouring may include one or more of: Ethylvanillin (vanilla); menthol, Isoamyl acetate (banana oil); or other. The precursor may include a substrate, e.g. reconstituted tobacco to carry one or more of the active component; a carrier; a flavouring.

As used herein, a **"storage portion"** may be a portion of the apparatus adapted to store the precursor. It may be implemented as fluid-holding reservoir or carrier for solid material depending on the implementation of the precursor as defined above.

As used herein, a **"flow path"** may refer to a path or enclosed passageway through an aerosol generating apparatus, e.g. for delivery of an aerosol to a user. The flow path may be arranged to receive aerosol from an aerosol generating unit. When referring to the flow path, upstream and downstream may be defined in respect of a direction of flow in the flow path, e.g. with an outlet being downstream of an inlet.

As used herein, a **"delivery system"** may be a system operative to deliver an aerosol to a user. The delivery system may include a mouthpiece and a flow path. The delivery system may be at least partly within the aerosol generating component.

As used herein, a **"flow"** may refer to a flow in a flow path. A flow may include aerosol generated from the precursor. The flow may include air, which may be induced into the flow path via a puff by a user.

As used herein, a **"puff"** (or **"inhale"** or **"draw"**) by a user may refer to expansion of lungs and/or oral cavity of a user to create a pressure reduction that induces flow through the flow path.

As used herein, an **"aerosol generating unit"** may refer to a device configured to generate an aerosol from a precursor. The aerosol generating unit may include a unit to generate a vapour directly from the precursor (e.g. a heating system or other system) or an aerosol directly from the precursor (e.g. an atomiser including an ultrasonic system, a flow expansion system operative to carry droplets of the precursor in the flow without using electrical energy or other system). A plurality of aerosol generating units to generate a plurality of aerosols (for example, from a plurality of different aerosol precursors) may be present in an aerosol generating apparatus.

As used herein, a **"heating system"** may refer to an arrangement of at least one heating element, which is operable to aerosolise a precursor once heated. The at least one heating element may be electrically resistive to produce heat from the flow of electrical current therethrough. The at least one heating element may be arranged as a susceptor to produce heat when penetrated by an alternating magnetic field. The heating system may be configured to heat a precursor to below 300 or 350 degrees C, including without combustion. The heating system may be provided within the aerosol generating component or within the device body.

As used herein **"heat-not-burn"** (or **"HNB"** or **"heated precursor"**) may refer to the heating of a precursor, typically tobacco, without combustion, or without substantial combustion (i.e. localised combustion may be experienced of limited portions of the precursor, including of less than 5% of the total volume).

As used herein, **"electrical circuitry"** may refer to one or more electrical components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the apparatus, or distributed between the apparatus and/or on one or more external devices in communication with the apparatus, e.g. as part of a system

As used herein, a **"processing resource"** (or **"processor"** or **"controller"**) may refer to one or more units for processing data, examples of which may include an ASIC, microcontroller, FPGA, microprocessor, digital signal processor (DSP) capability, state machine or other suitable component. A processing resource may be configured to execute a computer program, e.g. which may take the form of machine readable instructions, which may be stored on a non-transitory memory and/or programmable logic. The processing resource may have various arrangements corresponding to those discussed for the circuitry, e.g. on-board and/or off board the apparatus as part of the system. As used herein, any machine executable instructions, or computer readable media, may be configured to cause a disclosed method to be carried out, e.g. by a aerosol generating apparatus or system as disclosed herein, and may therefore be used synonymously with the term method.

As used herein, an **"external device"** (or **"peripheral device"**) may include one or more electronic components external to an aerosol generating apparatus. Those components may be arranged at the same location as the aerosol generating apparatus or remote from the apparatus. An external device may comprise electronic computer devices including: a server; a smartphone; a PDA; a video game controller; a tablet; a laptop; or other like device.

As used herein, a **"computer readable medium/media"** (or **"memory"** or **"data storage"**) may include any medium capable of storing a computer program, and may take the form of any conventional non-transitory memory, for example one or more of: random access memory (RAM); a CD; a hard drive; a solid state drive; a memory card; a DVD. The memory may have various arrangements corresponding to those discussed for the circuitry /processor. The present disclosure includes a computer readable medium configured to cause an apparatus or system disclosed herein to perform a method as disclosed herein.

As used herein, a **"communication resource"** (or **"communication interface"**) may refer to hardware and/or firmware for electronic information/data transfer. The communication resource may be configured for wired communication ("wired communication resources") or wireless communication ("wireless communication resource" / "wireless interface") Wireless communication resources may include hardware to transmit and receive signals by radio and may include various protocol implementations e.g. the 802.11 standard described in the Institute of Electronics Engineers (IEEE) and Bluetooth^{™} from the Bluetooth Special Interest Group of Kirkland Wash. Wired communication resources may include; Universal Serial Bus (USB); High-Definition Multimedia Interface (HDMI) or other protocol implementations. The apparatus may include communication resources for wired or wireless communication with an external device.

As used herein, a **"network"** (or **"computer network"**) may refer to a system for electronic information/data transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving electromagnetic (e.g. radio) waves. Therefore, for example, a chip or other device or component for realizing embodiments could generate data for output to another chip, device or component, or have as an input data from another chip, device, or component, and such an output or input could be referred to as "transmit" and "receive" including gerund forms, that is, "transmitting" and "receiving," as well as such "transmitting" and "receiving" within an RF context.

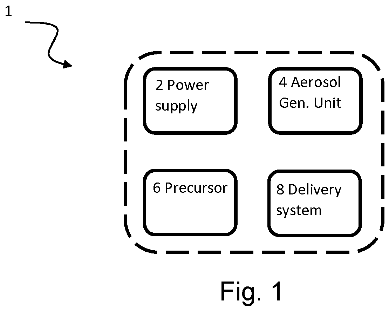

Referring to Fig. 1, an example aerosol generating apparatus 1 includes a power supply 2, for supply of electrical energy. The apparatus 1 includes an aerosol generating unit 4 that is driven by the power supply 2. The power supply 2 may include an electric power supply in the form of a battery and/or an electrical connection to an external power source. The apparatus 1 includes a precursor 6, which in use is aerosolised by the aerosol generating unit 4 to generate an aerosol. The apparatus 1 includes a delivery system 8 for delivery of the aerosol to a user.

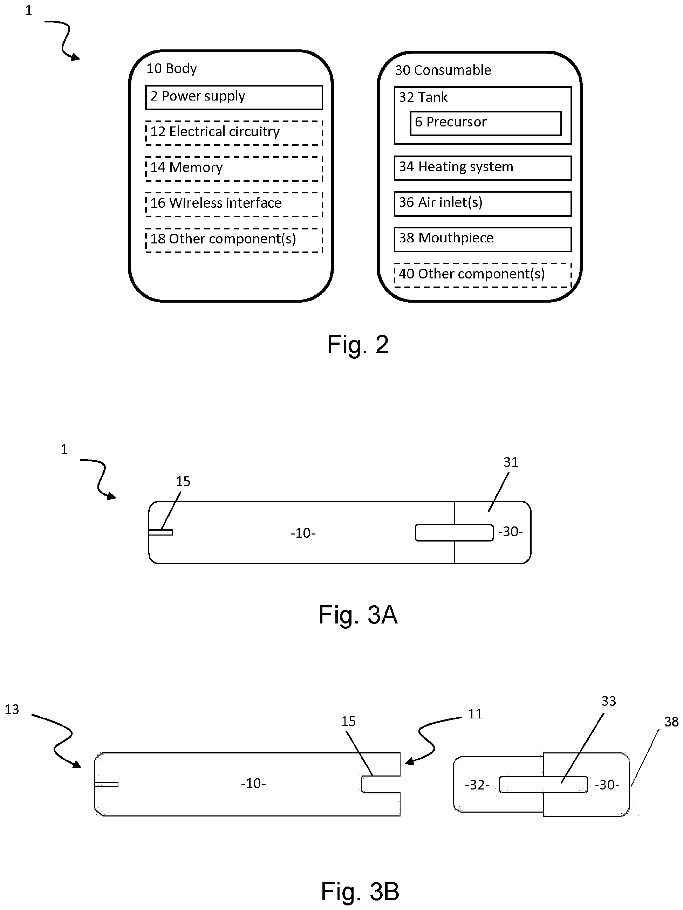

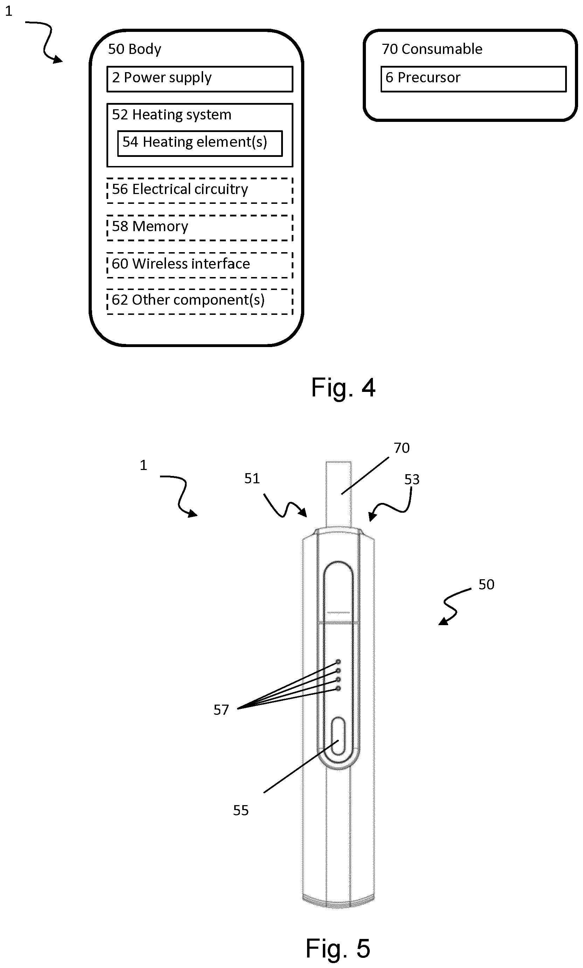

Electrical circuitry (not shown in Fig. 1; cf. Figs. 2 and 4) may be implemented to control the interoperability of the power supply 2 and aerosol generating unit 4.

In variant examples, which are not illustrated, the power supply 2 may be omitted since, e.g. an aerosol generating unit implemented as an atomiser with flow expansion may not require a power supply.

Fig. 2 shows an implementation of the apparatus 1 of Fig. 1, where the aerosol generating apparatus 1 is configured to generate aerosol from a liquid precursor.

In this example, the apparatus 1 includes a device body 10 and a consumable 30.

In this example, the body 10 includes the power supply 2. The body may additionally include any one or more of electrical circuitry 12, a memory 14, a wireless interface 16, one or more other components 18.

The electrical circuitry 12 may include a processing resource for controlling one or more operations of the body 10 and consumable 30, e.g. based on instructions stored in the memory 14.

The electrical circuitry 12 may include hardware acceleration for one or more encryption, decryption and/or hashing algorithms, for example SHA-256 (used by HMAC-SHA-256) and/or AES-CTR-128. The electrical circuitry 12 may include a BLE system on chip (SOC) configured to implement one or more such algorithms in hardware circuitry, for example a Texas Instruments CC2340 BLE SOC, where a SHA-256 calculation of 80 bytes of data may take approximately 350 microseconds, while an AES-CTR-128 encryption or decryption of 80 bytes of data may take approximately 150 microseconds.

The wireless interface 16 may be configured to communicate wirelessly with an external (e.g. mobile) device, e.g. via Bluetooth.

The other component(s) 18 may include one or more user interface devices configured to convey information to a user and/or a charging port, for example (see e.g. Fig. 3).

The consumable 30 includes a storage portion implemented here as a tank 32 which stores the liquid precursor 6 (e.g. e-liquid). The consumable 30 also includes a heating system 34, one or more air inlets 36, and a mouthpiece 38. The consumable 30 may include one or more other components 40.

The body 10 and consumable 30 may each include a respective electrical interface (not shown) to provide an electrical connection between one or more components of the body 10 with one or more components of the consumable 30. In this way, electrical power can be supplied to components (e.g. the heating system 34) of the consumable 30, without the consumable 30 needing to have its own power supply.

In use, a user may activate the aerosol generating apparatus 1 when inhaling through the mouthpiece 38, i.e. when performing a puff. The puff, performed by the user, may initiate a flow through a flow path in the consumable 30 which extends from the air inlet(s) 34 to the mouthpiece 38 via a region in proximity to the heating system 34.

Activation of the aerosol generating apparatus 1 may be initiated, for example, by an airflow sensor in the body 10 which detects airflow in the aerosol generating apparatus 1 (e.g. caused by a user inhaling through the mouthpiece), or by actuation of an actuator included in the body 10. Upon activation, the electrical circuitry 12 (e.g. under control of the processing resource) may supply electrical energy from the power supply 2 to the heating system 34 which may cause the heating system 32 to heat liquid precursor 6 drawn from the tank to produce an aerosol which is carried by the flow out of the mouthpiece 38.

In some examples, the heating system 34 may include a heating filament and a wick, wherein a first portion of the wick extends into the tank 32 in order to draw liquid precursor 6 out from the tank 32, wherein the heating filament coils around a second portion of the wick located outside the tank 32. The heating filament may be configured to heat up liquid precursor 6 drawn out of the tank 32 by the wick to produce the aerosol.

In this example, the aerosol generating unit 4 is provided by the above-described heating system 34 and the delivery system 8 is provided by the above-described flow path and mouthpiece 38.

In variant embodiments (not shown), any one or more of the precursor 6, heating system 34, air inlet(s) 36 and mouthpiece 38, may be included in the body 10. For example, the mouthpiece 36 may be included in the body 10 with the precursor 6 and heating system 32 arranged as a separable cartomizer.

Figs. 3A and 3B show an example implementation of the aerosol generating apparatus 1 of Fig. 2. In this example, the consumable 30 is implemented as a capsule/pod, which is shown in Fig. 3A as being physically coupled to the body 10, and is shown in Fig. 3B as being decoupled from the body 10.

In this example, the body 10 and the consumable 30 are configured to be physically coupled together by pushing the consumable 30 into an aperture in a top end 11 the body 10, with the consumable 30 being retained in the aperture via an interference fit.

In other examples (not shown), the body 10 and the consumable 30 could be physically coupled together in other ways, e.g. by screwing one onto the other, through a bayonet fitting, or through a snap engagement mechanism, for example.

The body 10 also includes a charging port (not shown) at a bottom end 13 of the body 10.

The body 10 also includes a user interface device configured to convey information to a user. Here, the user interface device is implemented as a light 15, which may e.g. be configured to illuminate when the apparatus 1 is activated. Other user interface devices are possible, e.g. to convey information haptically or audibly to a user.

In this example, the consumable 30 has an opaque cap 31, a translucent tank 32 and a translucent window 33. When the consumable 30 is physically coupled to the body 10 as shown in Fig. 3A, only the cap 31 and window 33 can be seen, with the tank 32 being obscured from view by the body 10. The body 10 includes a slot 15 to accommodate the window 33. The window 33 is configured to allow the amount of liquid precursor 6 in the tank 32 to be visually assessed, even when the consumable 30 is physically coupled to the body 10.

Fig. 4 shows an implementation of the apparatus 1 of Fig. 1, where the aerosol generating apparatus 1 is configured to generate aerosol by a heat-not-burn process.

In this example, the apparatus 1 includes a device body 50 and a consumable 70.

In this example, the body 50 includes the power supply 2 and a heating system 52. The heating system 52 includes at least one heating element 54. The body may additionally include any one or more of electrical circuitry 56, a memory 58, a wireless interface 60, one or more other components 62.

The electrical circuitry 56 may include a processing resource for controlling one or more operations of the body 50, e.g. based on instructions stored in the memory 58.

The electrical circuitry 56 may include hardware acceleration for one or more encryption, decryption and/or hashing algorithms, for example SHA-256 (used by HMAC-SHA-256) and/or AES-CTR-128. The electrical circuitry 12 may include a BLE system on chip (SOC) configured to implement one or more such algorithms in hardware circuitry, for example a Texas Instruments CC2340 BLE SOC, where a SHA-256 calculation of 80 bytes of data may take approximately 350 microseconds, while an AES-CTR-128 encryption or decryption of 80 bytes of data may take approximately 150 microseconds.

The wireless interface 60 may be configured to communicate wirelessly with an external (e.g. mobile) device, e.g. via Bluetooth.

The other component(s) 62 may include an actuator, one or more user interface devices configured to convey information to a user and/or a charging port, for example (see e.g. Fig. 5).

The body 50 is configured to engage with the consumable 70 such that the at least one heating element 54 of the heating system 52 penetrates into the solid precursor 6 of the consumable. In use, a user may activate the aerosol generating apparatus 1 to cause the heating system 52 of the body 50 to cause the at least one heating element 54 to heat the solid precursor 6 of the consumable (without combusting it) by conductive heat transfer, to generate an aerosol which is inhaled by the user.

Fig. 5 shows an example implementation of the aerosol generating apparatus 1 of Fig. 4.

As depicted in Fig. 5, the consumable 70 is implemented as a stick, which is engaged with the body 50 by inserting the stick into an aperture at a top end 53 of the body 50, which causes the at least one heating element 54 of the heating system 52 to penetrate into the solid precursor 6.

The consumable 70 includes the solid precursor 6 proximal to the body 50, and a filter distal to the body 50. The filter serves as the mouthpiece of the consumable 70 and thus the apparatus 1 as a whole. The solid precursor 6 may be a reconstituted tobacco formulation.

In this example, the at least one heating element 54 is a rod-shaped element with a circular transverse profile. Other heating element shapes are possible, e.g. the at least one heating element may be blade-shaped (with a rectangular transverse profile) or tube-shaped (e.g. with a hollow transverse profile).

In this example, the body 50 includes a cap 51. In use the cap 51 is engaged at a top end 53 of the body 50. Although not apparent from Fig. 5, the cap 51 is moveable relative to the body 50. In particular, the cap 51 is slidable and can slide along a longitudinal axis of the body 50.

The body 50 also includes an actuator 55 on an outer surface of the body 50. In this example, the actuator 55 has the form of a button.

The body 50 also includes a user interface device configured to convey information to a user. Here, the user interface device is implemented as a plurality of lights 57, which may e.g. be configured to illuminate when the apparatus 1 is activated and/or to indicate a charging state of the power supply 2. Other user interface devices are possible, e.g. to convey information haptically or audibly to a user.

The body may also include an airflow sensor which detects airflow in the aerosol generating apparatus 1 (e.g. caused by a user inhaling through the consumable 70). This may be used to count puffs, for example.

In this example, the consumable 70 includes a flow path which transmits aerosol generated by the at least one heating element 54 to the mouthpiece of the consumable.

In this example, the aerosol generating unit 4 is provided by the above-described heating system 52 and the delivery system 8 is provided by the above-described flow path and mouthpiece of the consumable 70.

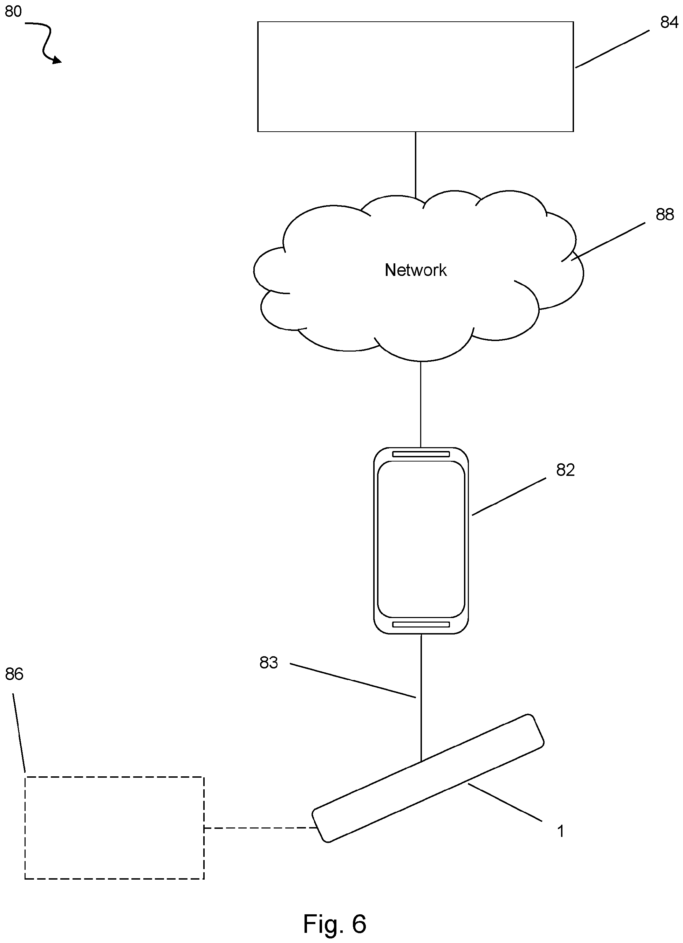

Fig. 6 shows an example aerosol generating system 80, which includes an aerosol generating apparatus 1, such as those described above with reference to any of Figs. 1-5.

The system 80 as shown in Fig. 1 includes a mobile communication device 82, a server 84, an optional charging station 86, as well as the aerosol generating apparatus 1.

For communication between the mobile communication device 82 and the aerosol generating apparatus 1, there may be established a communication connection 83, which in this example is a wireless communication connection, such as a Bluetooth^{™} or Bluetooth Low Energy BLE communication connection. Thus, the aerosol generating apparatus 1 may be configured to communicate wirelessly with the mobile communication device 82, e.g. via Bluetooth^{™} or Bluetooth Low Energy BLE or near field communication ("NFC"). The communication connection between the mobile communication device 82 and the server 84 may be an internet connection which includes the network 88.

The mobile communication device 82 may be a mobile phone, for example. The mobile communication device 82 may be configured to run an app for communicating with the aerosol generating apparatus 1.

The app may be configured to communicate with the server 84, via a network 88. The server 84 may utilise cloud storage, for example. The app may in some examples be a web application in a browser on the mobile communication device 82. The app may serve as a front end in communicative connection with the server 84. In other examples, the app may be a native app installed on the mobile communication device 82. The server 84 may be connected to the aerosol generating apparatus 1 via the app on the mobile communication device 82.

The network 88 may include a cellular network and/or the internet.

In other examples, the aerosol generating apparatus 1 may be configured to communicate with the server 84 via a connection that does not involve the mobile communication device 82, e.g. via a narrowband internet of things ("NB-loT") or satellite connection. Thus, in some examples, the mobile communication device 82 may be omitted from the system 80.

A skilled person would readily appreciate that the mobile communication device 82 may be configured to communicate via the network 88 according to various communication channels, preferably a wireless communication channel such as via a cellular network (e.g. according to a standard protocol, such as 3G or 4G) or via a WiFi network.

The app may be configured to assist a user with managing their aerosol generating apparatus 1, based on information communicated between the aerosol generating apparatus 1 and the app, information communicated directly between the aerosol generating apparatus 1 and the server 84, and/or information communicated between the app and the server 84.

The charging station 86 (if present) may be configured to charge (and optionally communicate with) the aerosol generating apparatus 1, via a charging port on the aerosol generating apparatus 1. The charging port on the smoking substitute device 10 may be a USB port, for example, which may allow the aerosol generating apparatus 1 to be charged by any USB-compatible device capable of delivering power to the aerosol generating apparatus 1 via a suitable USB cable (in this case the USB-compatible device would be acting as the charging station 86). Alternatively, the charging station could be a docking station specifically configured to dock with the aerosol generating apparatus 1 and charge the aerosol generating apparatus 1via the charging port on the aerosol generating apparatus 1.

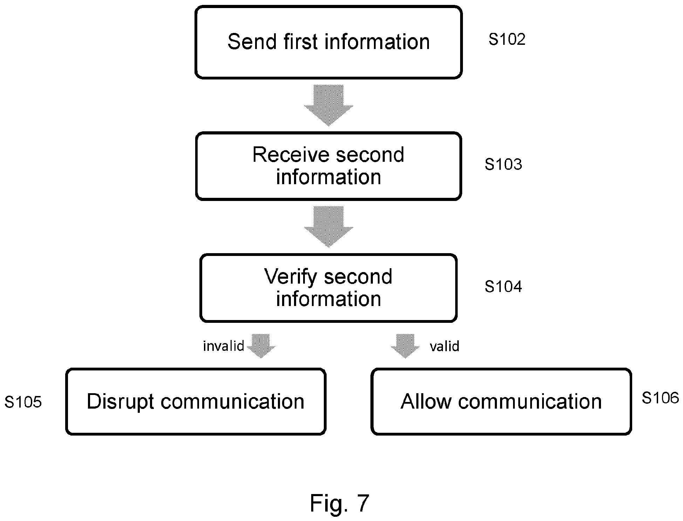

Fig. 7 is a flowchart of a handshake process, which is a method performed by the aerosol generating apparatus 1, with the external device, here exemplarily the server 84.

In a step S102, the aerosol generating apparatus 1 sends first information to the server 84. The aerosol generating apparatus 1 utilises a suitable communication connection with the server 84, for example via said mobile communication device 82, e.g. via an app running on the mobile communication device 82 (which, as noted above, may be a web app or native app), to send the first information to the server 84. The first information may thus be relayed by the mobile communication device 82 to the server 84.

In some examples, the first information is a random number, such as a quasi-random or a pseudo-random number, or a hash of a random number which here is referred to as a random hash. Any suitable hash function may be used, e.g. SHA-256. The first information may in some examples be information that is known to the aerosol generating apparatus 1 but not the server 84.

Next, although not shown in Fig. 7 (since this step is performed by the server 84, rather than the aerosol generating apparatus 1, the server 84 receives the first information and generates second information from the first information using shared knowledge that is shared by the aerosol generating apparatus 1 and the server 84, and sends the second information to the aerosol generating apparatus 1.

In a step S103, the aerosol generating apparatus 1 receives the second information from the server 84 in response to the first information.

In a step S104, the aerosol generating apparatus 1 determines whether the second information is valid or invalid by determining whether the second information is derived from the first information using shared knowledge that is shared by the aerosol generating apparatus 1 and the server 84.

The shared knowledge is secret, i.e. not public, but is known to both the aerosol generating apparatus 1 and the server 84. In some examples, the shared knowledge includes a pre-shared keyed hash function and a pre-shared key; e.g. HMAC-SHA-256 and an HMAC key. For generating the second information, the server 84 may use the first information with the keyed hash function and the shared key to calculate the second information. For verifying the second information, the aerosol generating apparatus 1 uses the first information with the keyed hash function and the shared key to calculate a value and compares the calculated value to the received second information.

In a step S105, if the value calculated by the aerosol generating apparatus 1 and the second information do not match, the aerosol generating apparatus 1 determines that the second information is not valid and disrupts communication with the server 84. In some examples, the aerosol generating apparatus 1 disrupts communication with the server 84 by terminating the communication connection with the server 84, or by discarding future information received from the server 84.

In a step S106, if the value calculated by the aerosol generating apparatus 1 and the second information match, the aerosol generating apparatus 1 determines that the second information is valid and allows communication with the server 84 to continue. Successfully validating the second information can be taken as an indication that the aerosol generating apparatus 1 is communicating with a valid server 84, and thus to ensure that communication takes place only with an authorised entity.

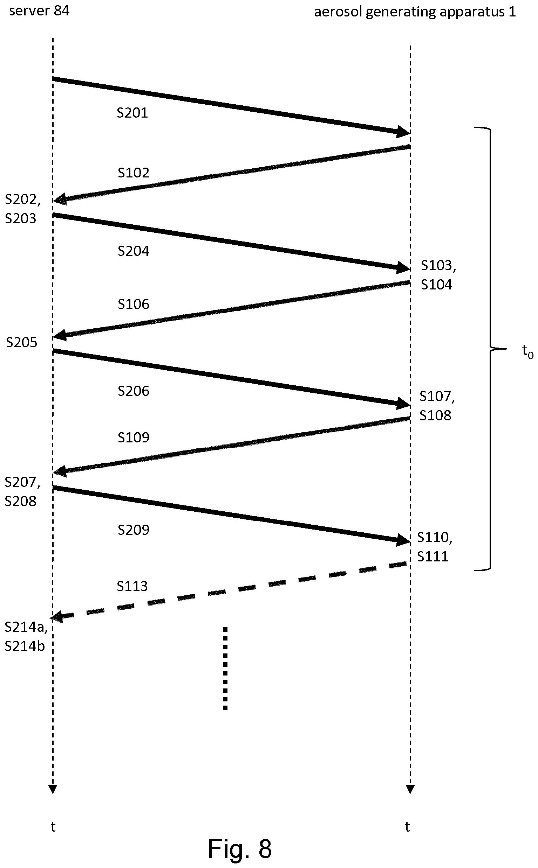

In some examples, the steps depicted in Fig. 7 may form only part of the handshake process between the aerosol generating apparatus 1 and the server 84, e.g. with other steps being included in the handshake process (see e.g. Fig. 8). In other examples, the steps depicted in Fig. 7 may be the only steps included in the handshake process.

Fig. 8 illustrates an implementation of the handshake process shown in Fig. 7 containing optional additional steps.

The handshake process of Fig. 8 is illustrated within the context of the aerosol generating system 80 including the aerosol generating apparatus 1 and the server 84.

That is, Fig. 8 illustrates the handshake process both from the point of view of the aerosol generating apparatus 1 and from the point of view of the server 84.

In a step S201, the server 84 sends a request for the first information to the aerosol generating apparatus 1. This step may be viewed as causing the handshake process to be initiated at the aerosol generating apparatus 1, rather than a step that is included in the handshake process itself.

In step S102 (which may be viewed as the first step in the handshake process), the aerosol generating apparatus 1 sends the first information to the server 84, in response to receiving the request from the server 84.

In a step S202, the server 84 receives the first information from the aerosol generating apparatus 1.

In a step S203, the server 84 generates the second information from the first information using the shared knowledge. As set out above, the server 84 uses the first information with the pre-shared keyed hash function and the pre-shared key to generate the second information.

In a step S204, the server 84 sends the second information to the aerosol generating apparatus 1. The aerosol generating apparatus 1 receives the second information in step S103, and in step S104 verifies the second information in step S104 (in the manner described in connection with Fig. 7).

Upon successful validation of the second information, the aerosol generating apparatus 1 allows further communication with the server 84 in step 106. As shown in Fig. 8, step 106 includes sending a confirmation to the server 84 that the second information is successfully validated.

In some examples, the handshake process is completed upon successful verification of the second information, or by sending the confirmation thereof to the server 84.

As shown in Fig. 8, the handshake process contains further steps (discussed below) in some examples.

In step S205, the server 84 receives the confirmation that the second information was successfully verified by the aerosol generating apparatus 1.

In step 206, the server 84 sends a request for apparatus-specific information to the aerosol generating apparatus 1. The server 84 requests any suitable apparatus-specific information, such as the serial number of the aerosol generating apparatus 1 stored locally by the aerosol generating apparatus 1, or information derived from this serial number. In some examples, the server 84 requests a hash of the serial number, e.g. a SHA-256 hash. Sending a hash of the serial number may simplify the sending of apparatus-specific information to the sever 84, or may help keep the serial number hidden from a rogue operator (e.g. if the information sent by the aerosol generating apparatus 1 is not encrypted by the aerosol generating apparatus 1).

In a step S107, the aerosol generating apparatus 1 receives the request for apparatus-specific information.

In a step S108, the aerosol generating apparatus 1 generates the hash of the serial number.

In a step S109, the aerosol generating apparatus 1 sends the third information, which includes the hash of the serial number, to the server 84.

In a step S207, the server 84 receives the third information.

In a step S208, the server 84 generates fourth information from the third information using the shared knowledge. In this example, the server 84 uses the same pre-shared keyed hash function and the same pre-shared key (as used to determine whether the second information was valid or invalid) to generate the fourth information. In other examples, the server 84 may use different shared information, e.g. a different pre-shared keyed hash function and/or a different pre-shared key, to generate the fourth information from the third information. In a step S209, the server 84 sends the fourth information to the aerosol generating apparatus 1.

In a step S110, the aerosol generating apparatus 1 receives the fourth information.

In a step S111, the aerosol generating apparatus 1 determines whether the fourth information is valid or invalid by determining whether the fourth information is derived from the third information using shared knowledge that is shared by the aerosol generating apparatus 1 and the server 84. In this example, the aerosol generating apparatus 1 determines whether the fourth information is valid or invalid using the same keyed hash function and the same shared key (as used to determine whether the second information was valid or invalid) in order to calculate a value and compare the calculated value to the received fourth information. Of course, if the server 84 used the different pre-shared keyed hash function and/or the different pre-shared key referred to above to generate the fourth information from the third information, then that different shared information may be used to calculate the value.

If the value calculated by the aerosol generating apparatus 1 and the fourth information do not match, the aerosol generating apparatus 1 determines that the fourth information is not valid and disrupts communication with the server 84. In some examples, disrupting communication with the server 84 involves the aerosol generating apparatus 1 terminating communication with the server 84 or discarding future information received from the server 84.

If the value calculated by the aerosol generating apparatus 1 and the fourth information match, the aerosol generating apparatus 1 determines that the fourth information is valid and allows further communication with the server 84.

In an optional step S113, the aerosol generating apparatus 1 may send confirmation of successful validation of the fourth information to the server 84 upon the aerosol generating apparatus 1 determining that the fourth information is valid.

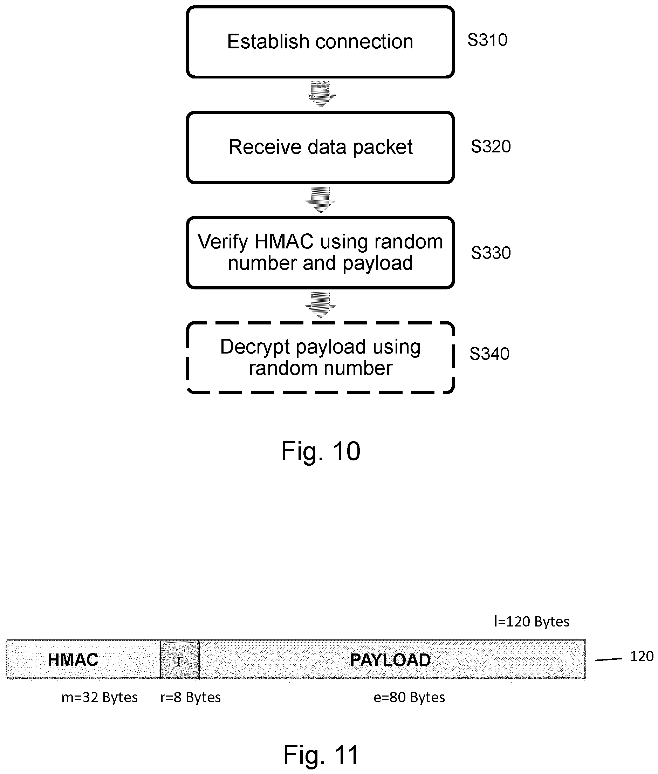

A determination by the aerosol generating apparatus 1 that the second and/or fourth information is valid can reasonably be taken as an indication that the server 84 (with which the aerosol generating apparatus 1 is communicating) is authorised to communicate with the aerosol generating apparatus 1. Subsequent communication between the aerosol generating apparatus 1 and the server 84 may therefore continue without necessarily requiring repetition of the handshake process (although the handshake process may be repeated subsequently, e.g. periodically, for improved security). However, as described in connection with Figs. 10-13, individual data packets sent back and forth between the server 84 and the aerosol generating apparatus 1 may still be verified upon receipt and before further processing thereof.

In an optional step S214a (which may or may not be considered part of the handshake process), the server 84 may determine the identity of the aerosol generating apparatus 1 from the hash of the serial number, e.g. by looking up the serial number of the aerosol generating apparatus 1 via a database or look-up table which relates serial numbers to hashes of serial numbers for a plurality of aerosol generating apparatuses (including the aerosol generating apparatus 1).

In an optional step S214b (which may or may not be considered part of the handshake process), the server 84 may use the serial number of the aerosol generating apparatus 1 (e.g. as determined in step 214a) in a further processing step executed at the external device. This further processing step may, for example, include notifying the serial number of the aerosol generating apparatus 1 to the mobile communication device 82 for display at the mobile communication device 82, e.g. via the app.

Although the optional steps S214a, S214b are depicted as taking place after the handshake method, they may be performed at any time after the hash of the serial number, has been received at the server the server 84.

Now there is provided exemplary communication messages as may be exchanged between the aerosol generating apparatus 1 and the server 84 when implementing the process illustrated in Fig. 8.

In step S201, the server 84 sends the request for the first information to the aerosol generating apparatus 1:
"RND";
and in step S102, the aerosol generating apparatus 1 responds to the server 84 with the first information in the form of a random SHA-256 hash:
"RND OK ffa208d38de3bc4e0d20e6632e10bc45a67c03656c00853be59a5ac66e95b641".

In step S204, the server 84 sends the second information to the aerosol generating apparatus 1, instructing the aerosol generating apparatus 1 to validate the HMAC generated by the server 84 for the first information:
"RNDH 66ab21b353e373f4bd1cc4d86444ddb7df0e332eea9ed4f3531dc5e0be548797";
and in step S106, the aerosol generating apparatus confirms successful validation to the server 84:
"RNDH OK".

Alternatively, in case the server 84 did not send the correct HMAC for the random value previously sent by the aerosol generating apparatus 1, the connection with the server 84 may be disrupted (e.g. terminated) by the aerosol generating apparatus 1.

In step 206, the server 84 sends the request for apparatus-specific information to the aerosol generating apparatus 1:
"SN";
and in step S109, the aerosol generating apparatus 1 sends the third information in the form of the SHA-256 hash of the serial number of the aerosol generating apparatus 1:
"SN OK 484720faf827ec7aa76a61281ec2a6e846e2eb76c6e37a022492e1b51a9f8cef".

In step S209, the server 84 sends the fourth information to the aerosol generating apparatus 1 and requests the aerosol generating apparatus 1 to validate the fourth information:
"SNH 4254d35913b8c01c8b6bec0088d5a369d67e9404aa41f997e036f84a67e169e5";
and in step 113, the aerosol generating apparatus confirms successful validation to the server 84:
"SNH OK".

Alternatively, in case aerosol generating apparatus 1 determines that the server 84 did not send the correct HMAC for the previously transmitted SHA-256 hashed unique number, the communication connection with the server 84 may be disrupted by the aerosol generating apparatus 1.

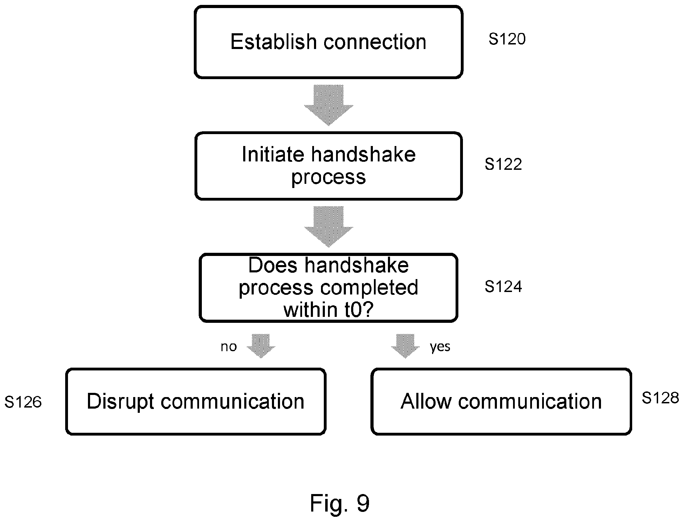

As illustrated in Fig. 8, the aerosol generating apparatus 1 may be configured to complete the handshake process within the predetermined time period t0. The aerosol generating apparatus 1 may begin timing the handshake process at a suitable event which initiates the handshake process, for example upon the aerosol generating apparatus 1 receiving the request in step S201, or when the aerosol generating apparatus 1 sends the first information in step S102. As discussed in more detail below in relation to Fig. 9, the aerosol generating apparatus 1 may takes at least one action to disrupt communication with the server 84 if the handshake process is not completed within the predetermined time period t0. The aerosol generating apparatus 1 may conclude that the handshake process has been completed at any suitable event, e.g. upon the aerosol generating apparatus 1 determining that the second information is valid, upon the aerosol generating apparatus 1 determining that the fourth information is valid, or upon the aerosol generating apparatus 1 sending confirmation of successful validation of the fourth information to the server 84. In some examples, this predetermined time period t0 is 10 seconds.

Fig. 9 illustrates an exemplary communication method involving the handshake process of Fig. 7 or Fig. 8.

The communication method includes a step S120 of establishing a communication connection with the server 84 by the aerosol generating apparatus 1.

The communication method includes a step S122 of the aerosol generating apparatus 1 initiating a handshake process between the aerosol generating apparatus 1 and the server 84, e.g. the handshake process of Fig. 7 or Fig. 8. This initiation of the handshake process may take place, for example, in response to receiving a request from the server 84, as in step S201 shown in Fig. 8, or when the aerosol generating apparatus sends the first information to the server, as in step S102 in Fig. 7 or Fig. 8.

The communication method includes a step S124 of the aerosol generating apparatus 1 determining whether the initiated handshake process between the aerosol generating apparatus 1 and the server 84 is completed within a predetermined time period t0.

The communication method includes a step S126 of, if the initiated handshake process is not determined to be completed within the predetermined time period t0, the aerosol generating apparatus performing at least one action to disrupt communication with the server 84.

The communication method includes a step S128 of, if the initiated handshake process is determined to be completed within the predetermined time period t0, the aerosol generating apparatus allows communication with the server 84 to continue.

Figs. 10 and 11 illustrate an exemplary communication method. Fig. 10 is a flowchart illustrating the method, while Fig. 11 schematically illustrates a data packet as used in the communication method.

The communication method includes a step S310 of establishing a communication connection with the server 84 by the aerosol generating apparatus 1.

The communication method further includes a step S320 of receiving a data packet 120 from the external server 84.

The communication method further includes a step S330 of verifying a message authentication code included in the data packet 120.

With regard to receiving the data packet 120 in step S320, a skilled person would recognise that on its journey between the server 84 and the aerosol generating apparatus 1 (in either direction), the data packet 120 may be transported through different networks / connections each having its own communication protocol. This means that the data packet 120 may be broken up, repackaged, disassembled, reassembled, encrypted, and/or decrypted (etc) according to these various communication protocols. That is, the data packet 120 may not stay in-tact (i.e. in the form as shown by data packet 400 as shown in Fig. 10) during its journey from server 84 to aerosol generating apparatus 1 (or vice versa), since it may be broken up, encrypted, or otherwise modified in order to be transferred from device to device in accordance with the relevant communication protocol (e.g. transport of the data packet 120 between the aerosol generating apparatus 1 and the mobile communication device 82 may involve the BLE protocol, transport of the data packet 120 through network 88 may involve the TCP/IP communication protocol, and so on). This breaking up / encryption / modification of the data packet 120 on its journey between server 84 and the aerosol generating apparatus 1 (in either direction) is inconsequential, as long as the data packet 120 as received by the aerosol generating apparatus 1 (following application of steps relating to the relevant communication protocols) is the same as the data packet (with the same HMAC, r, and encrypted payload) as sent by the server 84 (and vice versa).

With regard to the data packet 120, this contains m bytes which provide a message authentication code; r bytes which provide a packet-specific random number; and e bytes which provide a payload. Here, the numbers m, r and e are integers.

The message authentication code in this example is a hash-based Message Authentication Code, "HMAC". Exemplarily, the first number of bytes m is 32 bytes for the HMAC. The HMAC for the data packet 120 is calculated by the server using the r bytes and the e bytes, i.e. the random number and the payload, and also using a pre-shared key (an "HMAC key") stored locally by the server 84 and also by the aerosol generating apparatus 1 for verification. The HMAC may be calculated using any suitable algorithm, such as the industry standard HMAC-SHA-256 algorithm resulting in the HMAC being 32 bytes, which in this case corresponds to the exemplary first number of bytes m given above.

Exemplarily, the second number of bytes r is eight bytes. The random number is specific to each data packet, i.e. a new random number generated for every data packet. The random number is suitably generated, for example as a quasi-random or a pseudo-random number.

Exemplarily, the third number of bytes e is 80 bytes.

With regard to verifying the data packet 120 in step S330, the aerosol generating apparatus 1 may locally generates a HMAC using the r bytes and the e bytes, and using the pre-shared algorithm and the pre-shared key, and compares the generated HMAC against the received HMAC.

If the generated HMAC and the HMAC included in the data packet 120 do not match, the aerosol generating apparatus 1 determines that the data packet is not valid which may be taken as meaning that the aerosol generating apparatus 1 has not successfully verified the HMAC data packet 120. In some examples, the aerosol generating apparatus 1 may, upon not successfully verifying the HMAC, discard said data packet 120, e.g. take no further action with respect to said data packet 120.

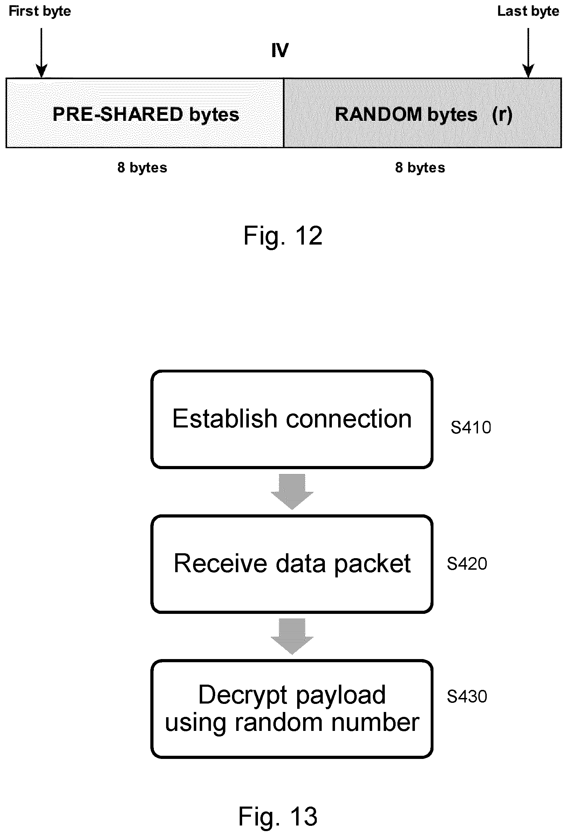

If the generated MAC and the received MAC match, the aerosol generating apparatus 1 determines that the data packet 120 is valid which may be taken as meaning that the aerosol generating apparatus 1 has successfully verified the HMAC. In some examples, the aerosol generating apparatus 1 proceeds, upon successfully verifying the HMAC of the data packet 120, to read the content contained in the payload. Depending on whether the payload is encrypted, the aerosol generating apparatus 1 may be required to decrypt the payload before its contents can be read. The method of Fig. 10 therefore includes an optional step S340 of decrypting the payload using the r bytes of the data packet, which may proceed as explained below with respect to Figs. 12 and 13.

Step S340 may includes generating an initialisation vector IV by combining the r bytes of the data packet and p bytes locally stored by the aerosol generating apparatus 1.

Fig. 12 schematically illustrates the initialisation vector IV for use with the communication method. As depicted in Fig. 12, the eight-byte random number is combined with eight pre-shared bytes, which are stored locally in both of the aerosol generating apparatus 1 and the server 84, e.g. by concatenating the eight pre-shared bytes followed by the eight random bytes r, or vice versa, to provide the initialisation vector IV for encryption. The pre-shared bytes are preferably not public but kept secret Returning to Fig. 10, step S340 further includes using the initialisation vector IV to decrypt the payload.

The payload may be encrypted/decrypted using any suitable encryption engine, such as AES-CTR-128.

The initialisation vector IV and a separate pre-shared encryption key, in this example an "AES-CTR-128 ENCRYPTION KEY", may be used to decrypt the encrypted payload, which may contain the actual (e.g., null or NUL terminated) plaintext message, which in turn may have been encrypted using the AES-CTR-128 algorithm (for example initialised with the initialisation vector IV as described above) together with the pre-shared "AES-CTR-128 ENCRYPTION KEY". For added security, the payload may be pre-filled with random data before a plaintext command or response is written into the payload prior to its encryption.

Fig. 13 illustrates an exemplary communication method which includes decryption of the payload.

The communication method of Fig. 13 may include the handshake process as described above, or may be implemented without the handshake process. Where the handshake process is included in the communication method, communication between the aerosol generating apparatus 1 and the server 84 may in some examples take place without encryption of the payload until the handshake process is successfully concluded, at which point the communication may continue with encryption of the payload.

The communication method of Fig. 13 may include verification of the message authentication code as described above, or may be implemented without verification of the message authentication code. Where verification of the message authentication code is included in the communication method, decryption of the payload may be conditional on successful verification of the message authentication code, as described with respect to step 340 above.

The communication method includes a step S410 of establishing a communication connection with the server 84 by the aerosol generating apparatus 1.

The communication method further includes a step S420 of receiving the data packet 120 from the external server 84. The data packet may be as described above with reference to Figs. 10 and 11.

The communication method further includes a step S430 of decrypting the data packet 120.

As described with reference to Fig. 11 and 12, step S430 includes generating the initialisation vector IV by combining the r bytes of the data packet and p bytes locally stored by the aerosol generating apparatus 1 and using the initialisation vector IV to decrypt the payload.

The communication methods described in connection with Figs. 10-13 may be used in combination with a handshake process as described in connection with Figs. 7-9. That is, the information sent between the server 84 and the aerosol generating apparatus 1 as part of the handshake processes of Figs. 7-9 may be contained in the payload of data packets which are configured, encrypted and/or verified as described in connection with Figs. 10-13. Combining these techniques helps to provide yet further security in the communication of information between the aerosol generating apparatus 1 and the server 84.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A communication method performed by an aerosol generating apparatus, the method comprising:
establishing a communication connection with an external device, and after establishing the communication connection:
receiving a data packet from the external device,
wherein the data packet contains:
m bytes providing a message authentication code, where m is an integer;
r bytes providing a packet-specific random number, where r is an integer; and
e bytes providing a payload, where e is an integer; and
verifying the message authentication code using the r bytes and the e bytes.

2. The communication method of claim 1,
wherein the payload is encrypted; and
wherein the method further includes, conditional on successfully verifying the message authentication code:
generating an initialisation vector IV by combining the r bytes of the data packet and p bytes locally stored by the aerosol generating apparatus; and
using the initialisation vector IV to decrypt the payload.

3. The communication method of claim 2, wherein p = r.

4. The communication method of claim 2 or 3, wherein the p bytes and the r bytes are combined by concatenating the p bytes and the r bytes.

5. The communication method of any one of claims 2 to 4,
wherein a symmetrical encryption/decryption algorithm and a key ENC are used to decrypt the payload.

6. The communication method of any preceding claim, wherein the verifying of the message authentication code includes generating a message authentication code using the r bytes and the e bytes; and comparing the generated message authentication code and the received message authentication code.

7. The communication method of any preceding claim, wherein the message authentication code is verified using shared knowledge that is shared by the aerosol generating apparatus and the external device.

8. The communication method of claim 7, wherein the message authentication code has been calculated by the external device using the r bytes and the e bytes using the shared knowledge.

9. The communication method according to claim 7 or 8, wherein the shared knowledge includes a pre-shared function; optionally the shared knowledge additionally includes a pre-shared key and the pre-shared function is configured to be used with the pre-shared key.

10. The communication method of claim 9, wherein the message authentication code is a hash-based message authentication code.

11. The communication method of any preceding claim, wherein m=32, r=8, and/or e=80.

12. The communication method of any preceding claim, further including a handshake process performed by the aerosol generating apparatus after establishing the communication connection;
wherein the handshake process includes:
sending first information to the external device;
receiving from the external device second information in response to the first information;
determining whether the second information is valid or invalid by determining whether the second information is derived from the first information using shared knowledge that is shared by the aerosol generating apparatus and the external device;
if the second information is determined valid, allowing communication with the external device to continue;
if the second information is determined invalid, performing at least one action to disrupt communication with the external device.

13. The communication method of any preceding claim, wherein the external device is a server, and wherein the aerosol generating apparatus establishes the communication connection with the server via a mobile communication device.

14. The communication method according to any one of the preceding claims, wherein the communication connection includes a Bluetooth Low Energy communication connection between the aerosol generating apparatus and the mobile communication device.

15. An aerosol generating apparatus, wherein the aerosol generating apparatus is arranged to perform a communication method according to any one of the preceding claims.
